# EUROPEAN PATENT APPLICATION

(11) **EP 3 316 370 A1**
(43) Date of publication of application: **02.05.2018**
(21) Application number: 16818171.7
(22) Date of filing: 24.06.2016
(51) Int. Cl.: H01M 8/04014, H01M 8/0612, H01M 8/12

(54) **SOLID OXIDE FUEL CELL SYSTEM HAVING COATING LAYER FORMED THEREON**

(30) Priority: 29.06.2015 KR 20150092183; 23.06.2016 KR 20160078432
(71) Applicant: Kyungdong Navien Co., Ltd., Seoul 08501 (KR)
(72) Inventor: SON, Seung Kil, Seoul 08501 (KR); SHIN, Seock Jae, Seoul 08501 (KR); PAEK, Se Jin, Seoul 08501 (KR); YI, Yong, Seoul 08501 (KR); KIM, Jin Hyung, Seoul 08501 (KR)
(74) Representative: Groth & Co. KB
(86) International application number: PCT/KR2016/006757
(87) International publication number: WO 2017/003138

(57) **Abstract**

The present disclosure provides a solid oxide fuel cell system including a coating layer, in which a coating layer having excellent durability at high temperatures is formed on surfaces of parts and pipes disposed inside a high-temperature box of a solid oxide fuel cell to prevent oxidation due to high temperatures or chromium volatilization due to high temperatures.

The solid oxide fuel cell system including a coating layer includes a high-temperature box, a burner, a heat exchanger, and a stack disposed within the high-temperature box, a plurality of pipes as gas transfer passages among the burner, the heat exchanger, and the stack, and a coating layer formed on surfaces of the burner, the heat exchanger, and the pipe to prevent oxidation due to high temperatures and chromium volatilization due to high temperatures.

## Description

### [Technical Field]

The present disclosure relates to a solid oxide fuel cell system including a coating layer and, more particularly, to a solid oxide fuel cell system including a coating layer, in which a ceramic or metal coating layer is formed on surfaces of parts (or components) and pipes disposed inside a high-temperature box to prevent oxidation due to high temperatures or chromium volatilization due to high temperatures, among solid oxide fuel cell systems.

### [Background Art]

Electrical energy that we currently use is mainly obtained by thermal power generation and nuclear power generation. In addition, a small amount of electric energy is obtained by hydroelectric power generation and other power generation.

According to thermal power generation, fossil fuel such as coal, or the like, is burnt, and therefore, a large amount of carbon dioxide is inevitably generated in the case of thermal power generation, and in addition, pollutants such as carbon monoxide, sulfur oxides, nitrogen oxides, and the like, are emitted to the atmosphere.

Also, in the case of nuclear power generation, a radioactive waste generated after the use of nuclear energy must be safely stored or treated, incurring high cost and causing trouble, and thus, the situation is not so much different from the thermal power generation in terms of environmental pollution.

Under these circumstances, in order to solve the problems such as environmental pollution, global warming, and the like, environmental protection through CO₂ saving utilizing various renewable energy and development of energy efficiency enhancement technologies has been promoted nationwide.

In particular, the renewable portfolio standard (RPS) enforced since 2012 has been mandatory for power generators of a certain scale or greater to supply more than a certain amount of total power generation, as renewable energy, in which a fuel cell-based power generation system is given a high weighting so as to be promoted in supply.

A fuel cell, a unit for converting chemical energy of fuel into electrical energy, generally refers to a power generation system producing electricity by causing hydrogen of a reformed gas obtained by reforming fuel such as a natural gas, methanol, gasoline, and the like, and oxygen in the air to electrochemically react at an anode and a cathode of a stack.

Here, a reaction formula and the total reaction formula at each pole are as follows.

Anode: 2H₂ + 2O₂- → 2H₂0 +4e⁻

Cathode: O₂ + 4e⁻ → 2O²⁻

Total reaction formula: 2H₂ + O₂ → 2H₂O

That is, ultimately, the fuel cell uses hydrogen as fuel and has no by-products other than water, and thus, it is advantageously very environmentally friendly.

Further, since the fuel cell obtains electrical energy from chemical energy by a relatively simple energy conversion process, supporting a very highly efficient power generation method.

Fuel cells may be classified as a polymer electrolyte fuel cell (PEMFC), a direct methanol fuel cell (DMFC), a phosphoric acid fuel cell (PAFC), a molten carbonate fuel cell (MCFC), a solid oxide fuel cell (SOFC), an alkaline fuel cell (AFC), and the like, according to types of electrolyte and electrode, and recently, solid oxide fuel cells, which have a reformer part that may be relatively simplified, which may use various types of fuel as a problem of poisoning with carbon monoxide, and the like, is eliminated, and which are operated at high temperatures to thus have lower dependence on high-priced catalysts than those of other fuel cells, have come to prominence.

Meanwhile, as mentioned above, the solid oxide fuel cell, in particular, a high-temperature box of the solid oxide fuel cell, is operated at a very high temperature. In addition, within the high-temperature box, air is present due to inflow of the outside air, as well as air introduced to a stack for power generation or to a burner for combustion.

In the related art, oxygen contained in the air oxidizes the components and the pipes disposed inside the high-temperature box in a high temperature state to degrade durability of the solid oxide fuel cell.

Meanwhile, since the high-temperature box is operated at a very high temperature, components disposed therein are required to be formed of a material having high heat resistance. In general, a material for high temperatures is expensive and difficult to process. For this reason, a material containing chromium which is relatively inexpensive and resistant to heat is commonly used as a material for components within the high-temperature box.

However, chromium is volatilized at high temperatures by oxygen, and inflow of the volatilized chromium to the cathode of the stack of the solid oxide fuel cell may drastically reduce performance of the stack.

Korean Patent Registration No. 10-0917610 (Entitled: "Method for coating metallic interconnect of solid oxide fuel cell") (Patent document 1) discloses an electrode coating technique for solving the above-mentioned problem of chromium volatilization. In the electrode coating technique, pulse plating is performed by setting an average current density Iₐ in a cobalt plating solution at room temperature with cobalt as an anode and a metal interconnect as a cathode and a maximum current density Iₚ and adjusting a current application time Tₒₙ, and a current interception time T_{off} on the basis of Iₐ = Iₚ × Tₒₙ/(Tₒₙ+T_{off}). According to scheme, it is possible to obtain a metal interconnect having a coating surface which is excellent in electrical conductivity and chromium volatilization inhibiting properties and which is minimized in occurrence of microcracks and micropores, improving performance of the solid oxide fuel cell.

However, since the electrode coating technique of Patent document 1 uses high-priced cobalt as an electrode and coating material, manufacturing cost is significantly increased, and in spite of application of the electrode coating technique, a degradation of performance of a stack due to chromium volatilization is not completely solved.

### [Disclosure]

### [Technical Problem]

The present disclosure has been developed to solve such conventional problems, and it is an object of the present disclosure to provide a solid oxide fuel cell system including a coating layer, in which a ceramic or metal coating layer having excellent durability at high temperatures is formed on surfaces of parts and pipes disposed inside a high-temperature box of a solid oxide fuel cell to prevent oxidation due to high temperatures or chromium volatilization due to high temperatures.

### [Technical Solution]

According to an aspect of the present disclosure, there is provided a solid oxide fuel cell system including a coating layer, including: a high-temperature box; a burner, a heat exchanger, and a stack disposed within the high-temperature box; a plurality of pipes as gas transfer passages among the burner, the heat exchanger, and the stack; and a coating layer formed on a surface of the burner, the heat exchanger, or the pipes to prevent oxidation due to high temperatures and chromium volatilization due to high temperatures.

Also, the coating layer may be a ceramic coating layer.

Also, the ceramic coating layer may be formed of a ceramic material, and the ceramic material may be a compound including zirconia or ceria. Also, the ceramic material may be a material used in an electrolyte of a stack of a solid oxide fuel cell.

Also, the ceramic coating layer may have a thickness ranging from 5 to 100 µm.

Also, an oxide film may be formed between the surface of the burner, the heat exchanger, or the pipes and the ceramic coating layer, and adhesion between the surface and the ceramic coating layer may be enhanced by the oxide film.

Also, the coating layer may be a metal coating layer.

Also, the metal coating layer may be formed of a metal material as an alloy of one or more selected from the group consisting of nickel, cobalt, palladium, platinum, and gold.

Also, the metal material may be a material used in an electrode of a stack of a solid oxide fuel cell.

Also, the metal coating layer may have a thickness ranging from 2 to 20 µm.

Also, a metal oxide layer may be formed on a surface of the metal coating layer.

Meanwhile, the heat exchanger may include a heat-exchange type reformer and an air preheater, a heat-exchange medium may be supplied to the heat-exchange type reformer along the pipe, a combustion gas of the burner may be supplied to the air preheater along the pipe, and the coating layer may be formed on an outer or inner surface of the burner, the heat-exchage type reformer and the air preheater in which the heat-exchange medium or the combustion gas is present, a pipe along which the heat-exchange medium is supplied to the heat-exchange type reformer, and a pipe from the burner to the air preheater.

The coating layer may be formed on an inner or outer surface of a pipe along which the heat-exchange medium from the heat-exchange type reformer is discharged to the outside of the high-temperature box and a pipe along which the combustion gas from the air preheater is discharged to the outside of the high-temperature box.

Also, the heat exchanger may include a heat-exchange type reformer, fuel or steam supplied to the stack may be sequentially supplied to the heat-exchange type reformer and the stack along the pipe, and the coating layer may be formed on an inner or outer surface of the heat-exchange type reformer in which the fuel or steam is present or a pipe from the heat-exchange type reformer to the stack.

A cathode discharge gas discharged from a cathode of the stack may be supplied to the burner, and the coating layer may be formed on an inner or outer surface of a pipe from the cathode of the stack in which the cathode discharge gas is present to the burner.

Also, the heat exchanger may include an anode discharge gas cooler, an anode discharge gas discharged from an anode of the stack may be supplied to the anode discharge gas cooler, and the coating layer may be formed on an inner or outer surface of a pipe from the anode of the stack in which the anode discharge gas is present to the anode discharge gas cooler.

The pipe may further include a pipe supplying the anode discharge gas from the anode discharge gas cooler to the burner, the anode discharge gas may be supplied to the burner along the pipe, and the coating layer may be formed on an inner or outer surface of the pipe at a predetermined distance from the burner in which the anode discharge gas is present.

Also, the pipe may further include a pipe supplying air for combustion from the outside of the high-temperature box to the burner, the air for combustion may be supplied to the burner along the pipe, and the coating layer may be formed on an inner or outer surface of the pipe at a predetermined distance from the burner in which the air for combustion is present.

Also, the heat exchanger may include an air preheater, air supplied to the stack may be supplied to the air preheater and the stack along the pipe, and the coating layer may be formed on an inner surface of the air preheater in which the air is present or a pipe from the air preheater to the stack. The coating layer may be formed on an inner surface of the air preheater and a second air pipe, the only section in which volatilized chromium is introduced to a cathode after chromium volatilization occurs outside of the stack in the solid oxide fuel cell system.

Also, the heat exchanger may include an air preheater, air supplied to the stack may be supplied to the air preheater and the stack along the pipe, and the coating layer may be formed on an outer surface of the air preheater in which the air is present or a pipe from the air preheater to the stack.

Also, the pipe may further include a pipe supplying air for combustion from the outside of the high-temperature box to the burner, the air for combustion may be supplied to the burner along the pipe, and the coating layer may be formed as a metal coating layer on an inner or outer surface of the pipe at a predetermined distance from the burner in which the air for combustion is present.

Also, the pipe may further include a pipe supplying fuel for combustion from the outside of the high-temperature box to the burner, the fuel for combustion may be supplied to the burner along the pipe, and the coating layer may be formed on an inner or outer surface of the pipe at a predetermined distance from the burner in which the fuel for combustion is present.

### [Advantageous Effects]

According to the solid oxide fuel cell system having the coating layer of the present disclosure configured as described above, since a ceramic or coating layer is formed on parts and pipes disposed inside the high-temperature box to prevent oxidation due to high temperatures and chromium volatilization due to high temperatures, high-temperature durability of the solid oxide fuel cell system may be improved and a drastic degradation of performance of the stack due to volatilized chromium may be prevented.

In particular, according to the present disclosure, it is ascertained that chromium volatilization occurs outside the stack and that the only section in which the volatilized chromium can flow into the cathode is the inner surfaces of the air preheater and the pipe from the air preheater to the stack, and thus, by forming a ceramic or coating layer on the inner surfaces to prevent chromium volatilization, a degradation of performance of the stack caused due to the introduction of volatilized chromium to the cathode is significantly improved.

Also, in case where the coating layer is a metal coating layer, the same metal material as that used in the electrode of the stack is used in the coating layer, whereby although the coated material is separated from the parts and the pipes and introduced to the stack, it does not chemically affect and thus stack performance may be maintained.

### [Description of Drawings]

FIG. 1 is a view illustrating a solid oxide fuel cell system in which a coating layer is formed according to an embodiment of the present disclosure.
FIG. 2 is a view illustrating a connection state of parts and pipes inside a high-temperature box of a solid oxide fuel cell system in which a coating layer is formed according to an embodiment of the present disclosure.
FIG. 3 is a view illustrating a formation position of a coating layer for preventing oxidation at high temperatures in a solid oxide fuel cell system in which a coating layer is formed according to an embodiment of the present disclosure.
FIG. 4 illustrates a formation position of a coating layer for preventing chromium volatilization in a solid oxide fuel cell system in which a coating layer is formed according to an embodiment of the present disclosure.

### [Best Modes]

Hereinafter, an embodiment of a solid oxide fuel cell system including a coating layer according to the present disclosure will be described in detail with reference to the accompanying drawings.

The present disclosure may, however, be embodied in different forms and should not be construed as limited to the embodiments set forth herein. Rather, these embodiments are provided so that this disclosure will be thorough and complete and will fully convey the scope of the present disclosure to those skilled in the art, and the present disclosure is only defined by the scopes of claims. For reference, in describing the present disclosure, a detailed description of known functions or components associated with the present disclosure unnecessarily obscures the gist of the present disclosure, the detailed description will be omitted.

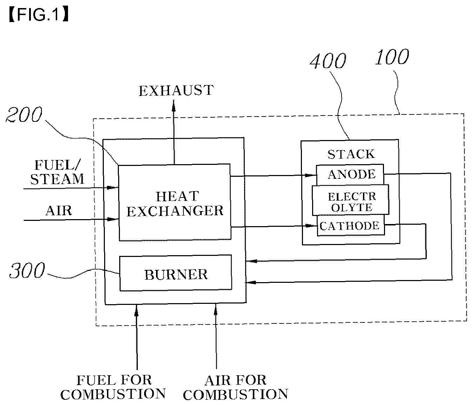

FIG. 1 is a view illustrating a solid oxide fuel cell system in which a coating layer is formed according to an embodiment of the present disclosure.

The solid oxide fuel cell system in which a coating layer is formed according to an embodiment of the present disclosure includes a high-temperature box, a heat exchanger 200, a burner 300, a stack 400, and a plurality of pipes (refer to the arrows in FIG. 1), gas transfer passages among the heat exchanger 200, the burner 300, and the stack 400.

The high-temperature box generally provides insulation to maintain an operating temperature of a component operated at high temperatures among the components applied to the fuel cell system and minimizes heat loss to enhance operating efficiency of the system. This high-temperature box is not explicitly illustrated in FIG. 1 but high-temperature components such as the heat exchanger 200, the burner 300, and the stack 400 are disposed therein.

The stack 400 generates DC power through an electrochemical reaction between hydrogen contained in supplied fuel and oxygen contained in air. The fuel supplied to the stack 400 is converted into hydrogen by a reformer, but is not illustrated in FIG. 1.

The solid oxide fuel cell system in which the coating layer is formed according to an embodiment of the present disclosure may include a heat-exchange type reformer, and the reformer may be included in the heat exchanger 200. Details thereof will be described hereinafter.

The heat exchanger 200 heats fuel and air supplied at room temperature from the outside of the high-temperature box to a temperature suitable for being supplied to the stack 400. The fuel and air heated through the heat exchanger 200 are supplied to the stack 400. Power is generated by the fuel and air supplied to the stack and a high temperature discharge gas discharged from an anode or a cathode of the stack 400 is supplied to the heat exchanger 200 or the burner 300.

The burner 300 may receive additional fuel for combustion or air for combustion in addition to the high-temperature discharge gas. The fuel for combustion or air for combustion may be supplied directly to the burner 300 or may be heated via the heat exchanger 200 and subsequently supplied to the burner 300. A high-temperature combustion gas generated due to combustion in the burner 300 is supplied to the heat exchanger 200 and is used to heat fuel, air, or steam supplied to the stack 400. To this end, the high-temperature combustion gas is discharged to the outside of the high-temperature box after heat is collected by the heat exchanger 200.

As described above, high temperature fuel, combustion gas, or air is supplied or flows in the heat exchanger 200, the burner 300, the stack 400, or the pipes connected therebetween. Therefore, the inside of the high-temperature box is in a very high-temperature state, and the components disposed inside the high-temperature box are made of a steel material containing a predetermined amount of chromium in order to increase heat resistance at high temperatures.

Inside the high-temperature box, air due to inflow of ambient air, as well as air supplied to the stack 400 or the burner 300 for combustion is present. The high-temperature state and the presence of oxygen contained in the air cause the components disposed within the high-temperature box to be oxidized due to high temperatures and cause the chromium-containing components to be chromium-volatilized due to high temperatures.

A mechanism of the oxidation due to high temperatures and the chromium volatilization due to high temperatures are not the same. In particular, the oxidation due to high temperatures occurs when a high-temperature gas comes into contact with the components and the pipes, whereas the chromium volatilization due to high temperatures occurs only when oxygen at high temperatures comes into contact with the pipes.

The oxidation due to high temperatures corrodes the components disposed inside the high-temperature box to degrade durability of the fuel cell system. The chromium volatilization due to high temperatures drastically reduces performance of the stack 400 when volatilized chromium is introduced to the stack 400. In detail, when chromium introduced to the inside of the stack 400 comes into contact with the electrode of the stack, particularly, the cathode having a perovskite structure, chromium reacts with an element constituting the electrode to drastically damage the perovskite electrode structure. Therefore, the chromium volatilization due to high temperatures is a problem that should be solved in order to maintain performance of the fuel cell.

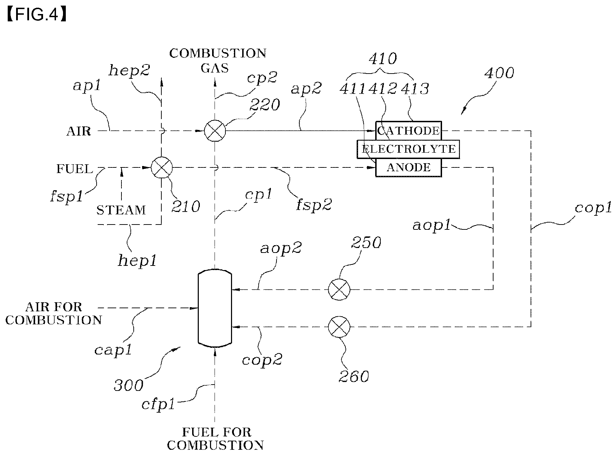

However, as mentioned above, the conventional technique of coating the electrode in the stack as in Patent document 1 cannot completely solve the problem of the degradation of performance of the stack due to chromium volatilization. The present disclosure solves the conventional problem, details thereof will be described with reference to FIG. 4.

The present disclosure effectively prevents oxidation due to high temperatures and chromium volatilization due to high temperatures by forming a coating layer on surfaces of parts and pipes disposed inside a high-temperature box. The coating layer prevents oxidation and chrome volatilization by fundamentally preventing a metal material forming the parts and the pipes from coming into contact with a high-temperature gas.

According to an embodiment of the present disclosure, the coating layer may be a ceramic coating layer using a ceramic material.

Since the ceramic material has high heat resistance, it may be highly appropriate for coating the burner 300, the heat exchanger 200, or the pipes (indicated by the arrows) which are placed in a high temperature state during an operation. Also, since the ceramic material can have a dense structure, the burner 300, the heat exchanger 200, or the pipes may be prevented from being in contact with oxygen. Accordingly, the burner 300, the heat exchanger 200, or the pipes may be prevented from being oxidized or chromium is prevented from being volatilized in the burner 300, the heat exchanger 200, or the pipes.

Meanwhile, it is preferable to use a ceramic material which does not contain silicon, sulfur, phosphorus, or chromium as the material used in the ceramic coating layer.

Also, the material used in the ceramic coating layer may be a material used in an electrolyte of the stack 400 of the solid oxide fuel cell. Since the electrolyte of the stack 400 is formed of a ceramic material having high heat resistance in terms of the characteristics of the solid oxide fuel cell, the ceramic material used in the electrolyte is very appropriate for coating the burner 300, the heat exchanger 200, or the pipes.

The material used in the ceramic coating layer may be a compound containing zirconia (ZrO₂) or ceria (CeO₂). Zirconia (ZrO₂) or ceria (CeO₂) is highly resistant to heat, corrosion, and a rapid change in temperature, and thus, it may be very appropriate for forming the coating layer.

The ceramic coating layer preferably has a thickness of 5 to 100 µm. If the thickness of the ceramic coating layer is less than 5 µm, cost for forming the ceramic coating layer is significantly increased and the phenomenon that the surface of the burner 300, the heat exchanger 200, or the pipes are in contact with oxygen may not be prevented. If the thickness of the ceramic coating layer exceeds 100 µm, layer separation, that is, a phenomenon that the surface of the burner 300, the heat exchanger 200, or the pipes and the coating layer are separated, may occur.

Further, an oxide film may be formed between the surface of the burner 300, the heat exchanger 200, or the pipes and the ceramic coating layer. The oxide film may be formed by a general method, and adhesion between the surface of the burner 300, the heat exchanger 200, or the pipes and the ceramic coating layer may be increased by the oxide film.

According to another embodiment of the present disclosure, the coating layer may be a metal coating layer.

The metal coating layer may be formed of a metal material as an alloy of one or more selected from the group consisting of nickel, cobalt, palladium, platinum, and gold. The metal material has high heat resistance at high temperatures and is rarely oxidized, and thus, it is widely used as a plating material for a surface treatment.

Nickel (Ni) is a transition element which is in group 10 and period 4 in the periodic table and is a metallic material having a silver-white strong luster. Nickel has relatively low chemical reactivity and is more stable than iron, but when heated, nickel reacts with oxygen or steam in the air to form an oxide protective coating. The plating method using nickel or a nickel alloy is one of the most commonly used corrosion prevention methods in the industrial field

Cobalt (Co) is a silver-gray metallic material having ferromagnetism as a transition element which is group 9 and period 4 in the periodic table. Cobalt has reactivity lower than that of iron and does not react with gases such as hydrogen (H₂), nitrogen (N₂), and the like, at high temperatures. However, when heated at high temperatures, cobalt reacts with oxygen to produce metal oxides such as Co₃O₄ and CoO.

Palladium (Pd) is a transition element which is in group 10 and in period 5 in the periodic table and is one of the platinum group metals excellent in ductility and malleability. Having excellent abrasion resistance and corrosion resistance, a palladium alloy is commonly used as a plating material and it reacts with oxygen at high temperatures to produce a palladium oxide (PdO).

Platinum (Pt) is a representative element of a platinum group metal as a transition element which is in group 10 and period 6 in the periodic table. Platinum or a platinum alloy is hard, has little corrosiveness, and is very small in chemical reactivity, and thus, it is not oxidized at any temperature in the air.

Gold (Au) is a transition element which is group 11 and period 6 in the periodic table and is one of the copper group elements including copper, silver, and the like. Since gold is one of solid elements with smallest chemical reactivity, it is not corroded in the air or water but maintained in the original state, and thus, it is used for surface plating.

As described above, in the case of some metallic materials such as nickel, cobalt, and palladium, although the metal coating layer is formed and immediately used without a subsequent separate heat treatment, a metal oxide layer may be formed on a surface of the metal coating layer due to a high-temperature oxidation reaction under an operating environment within the high-temperature box which is contact with a gas at high temperatures. The metal oxide layer is a ceramic material which reduces chemical reactivity of the surface of the metal coating layer to more effectively prevent high-temperature oxidation and chromium volatilization of devices and components disposed within the high-temperature box.

The metal coating layer may be formed through electroplating or electroless plating. The electroplating or electroless plating provides a more economical method than using a device and a component itself disposed within the high-temperature box as high-priced material for high temperatures. Since electroplating may be difficult to perform coating within parts or pipes, it is -preferable to install a plating cathode inside the parts or pipes at the time of plating. Electroless plating is used for parts with complex structures. In the case of high-temperature components where a passive state is formed on the metal surface, a surface pre-treatment may be performed to increase deposition power of a cathode material.

Since electroplating or electroless plating is a method of depositing a metal material on a metal surface through a chemical reaction or electrochemical reaction, it may be used immediately without a separate heat treatment process, and since the coating layer is thin, tubing and fitting may be performed after the coating operation.

The metal material may be a material used as an electrode of the stack of the solid oxide fuel cell. A representative example is a nickel metal. Nickel (Ni), strontium (Sr), magnesium (Mg), and the like, are widely used as an electrode material of the solid oxide fuel cell. When the material of the metal coating layer is the same as the electrode material of the fuel cell, although the coated material is released from the components or the pipes and introduced to the stack, it may not chemically affect the stack and performance of the stack may be maintained.

A thickness of the metal coating layer is preferably 2 to 20 µm. If the thickness of the metal coating layer is less than 2 µm, the metal element may be entirely consumed in the chemical reaction process at high temperatures to cause surfaces of the burner 300, the heat exchanger 200, or the pipes to be exposed to the outside. If the thickness exceeds 20 µm, cracks may occur in the coating layer to cause hydrogen and oxygen in the air to reach the surfaces of the burner 300, the heat exchanger 200, or the pipes, to result in oxidation and chromium volatilization.

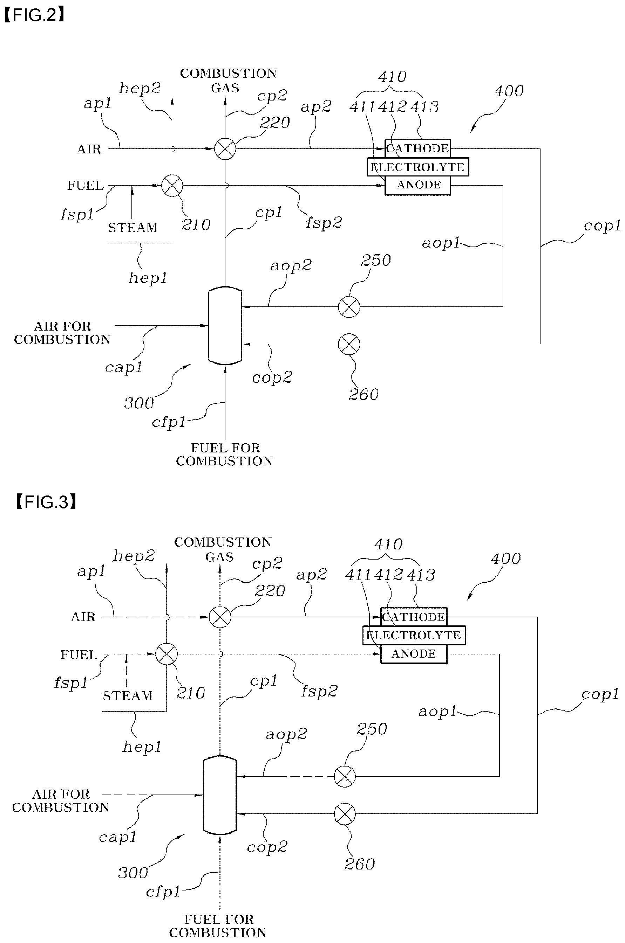

FIG. 2 is a view illustrating a connection state of parts and pipes inside the high-temperature box of the solid oxide fuel cell system in which a coating layer is formed according to an embodiment of the present disclosure. FIG. 3 is a cross- FIG. 4 is a view illustrating a formation position of a coating layer for preventing chromium volatilization in a solid oxide fuel cell system in which the coating layer shown in FIG. 2 is formed, FIG. 3 is a view illustrating a formation position of a coating layer for preventing high-temperature oxidation in a solid oxide fuel cell system in which a coating layer is formed according to an embodiment of the present disclosure, and FIG. 4 illustrates a formation position of a coating layer for preventing chromium volatilization in a solid oxide fuel cell system in which a coating layer is formed according to an embodiment of the present disclosure.

All the coating layers mentioned hereinafter are used to include both a ceramic coating layer and a metal coating layer. In FIGS. 3 and 4, the heat exchanger 200, the burner 300, or the pipes where a coating layer is formed are indicated by the solid line, and parts where a coating layer is not formed are indicated by the broken line.

First, a combustion gas supply line in which the burner is supplied with combustion fuel, combustion air, and the like, to generate a high-temperature combustion gas and supplies required heat to a part which is to be heated to a temperature equal to or higher than a predetermined temperature within the solid oxide fuel cell system through heat-exchange will be described.

For this combustion gas supply line, the heat exchanger 200 according to an embodiment of the present disclosure may include an air preheater 220. The air preheater 220 heats air supplied to the high-temperature box and supplies the heated air to the stack 400.

The burner 300 according to the present disclosure is disposed inside the high-temperature box and is supplied with a discharge gas from the stack 400 to generate a high-temperature combustion gas. The combustion gas may be supplied to the air preheater 220 along a first combustion gas pipe cp1. The combustion gas supplied to the air preheater 220 is heat-exchanged with air supplied to the stack 400. Through the heat-exchange in the air preheater 220, air is heated and a temperature of the combustion gas is lowered. The combustion gas heat-exchanged in the air preheater 220 may be discharged to the outside of the high-temperature box along a second combustion gas pipe cp2.

Formation of a coating layer according to an embodiment of the present disclosure in the aforementioned combustion gas supply line will be described.

The combustion gas is present at temperatures as high as to cause oxidation in the burner 300, the air preheater 220 and the first combustion gas pipe cp1 as a pipe between the burner 300 and the air preheater 220 and in the second combustion gas pipe cp2 as a pipe along which the combustion gas from the air preheater 220 is discharged to the outside of the high-temperature box.

Heat of the combustion gas is transmitted to the burner 300, the air preheater 220, the first combustion gas pipe cp1, and the second combustion gas pipe cp2, and accordingly, the preheater 220, the first combustion gas pipe cp1, and the second combustion gas pipe cp2 have a temperature similar to that of the combustion gas.

Since the combustion gas includes a large amount of oxygen, oxidation may occur at inner surfaces of the burner 300, the air preheater 220, the first combustion gas pipe cp1, and the second combustion gas pipe cp2 at high temperatures. Thus, according to an embodiment of the present disclosure, as illustrated in FIG. 3, a coating layer may be formed on the inner surfaces of the burner 300, the air preheater 220, the first combustion gas pipe cp1, and the second combustion gas pipe cp2. The coating layer formed on the inner surfaces may be formed to be in direct contact with the combustion gas.

Outer surfaces of the burner 300, the air preheater 220, the first combustion gas pipe cp1, and the second combustion gas pipe cp2 are in contact with air according to an inflow of ambient air into the high-temperature box. Due to the high temperatures and contact with oxygen based on air, oxidation due to high temperatures may occur at the outer surfaces of the burner 300, the air preheater 220, the first combustion gas pipe cp1, and the second combustion gas pipe cp2. Thus, according to an embodiment of the present disclosure, as illustrated in FIG. 3, a coating layer may also be formed on the outer surfaces of the burner 300, the air preheater 220, the first combustion gas pipe cp1, and the second combustion gas pipe cp2.

Next, a fuel gas supply line in which fuel is supplied to the inside of the high-temperature box and a hydrogen gas generated as the fuel is reformed through the heat-exchange type reformer 210 is supplied to the anode of the stack 400 will be described.

The fuel used in power generation in the stack 400 is supplied into the high-temperature box, and the fuel may be in a room temperature state. The fuel may be various types of fuel in a hydrogen or hydrocarbon group, such as natural gas (NG), liquefied natural gas (LNG), liquefied petroleum gas (LPG), diesel, and the like. The fuel supplied into the high-temperature box may contain steam or water by a separate supply device (not shown).

The fuel supplied into the high-temperature box may be supplied to the heat-exchange type reformer 210 along a first fuel/steam pipe fsp1. The fuel supplied to the heat-exchange type reformer 210 is heat-exchanged with a high-temperature heat exchange medium at the heat-exchange type reformer 210 so as to be heated. Here, when the fuel contains water rather than steam, the water is phase-changed into steam. The heat-exchange type reformer 210 reforms the fuel to generate a hydrogen gas.

To this end, a pipe along which a separate heat-exchange medium passes may be formed in the heat-exchange type reformer 210. That is, a pipe hep1 along which the heat-exchange medium is supplied to the heat-exchange type reformer 210 and a pipe hep2 along which the heat-exchange medium having a temperature lowered during the heat-exchange process in the heat-exchange type reformer 210 is discharged from the heat-exchange type reformer 210 to the outside of the high-temperature box may be provided.

Meanwhile, the hydrogen gas may be supplied to an anode 411 of the stack 400 along the second fuel/steam pipe fsp2. The stack 400 generally includes a plurality of single cells 410 connected in series or in parallel and the single cells 410 include the porous anode 411, a cathode 413, and an electrolyte 412 having a dense structure disposed therebetween.

Hydrogen H₂ contained in the hydrogen gas supplied to the anode 411 of the stack 400 reacts with oxygen ions O²⁻ conducted through the electrolyte 412, an ion conductor, from the cathode 413. When electrons, water (H₂O), and heat are released due to the reaction, the electrons are electrically operated in the process of moving to a positive electrode through an external circuit (not shown).

A gas discharged from the anode 411 after the reaction, i.e., an anode-off gas, may be supplied to the burner 300 along a first anode discharge gas pipe aop1 and a second anode discharge gas pipe aop2 and used as fuel for burning of the burner 300. As described above, since the reaction is an exothermic reaction that releases heat, the anode discharge gas is discharged at a temperature slightly higher than that of a hydrogen gas supplied to the anode 411.

Further, since the reaction is a reaction for discharging water (H₂O), a large amount of steam is included in the anode discharge gas. Due to the large amount of steam, the anode discharge gas may not be appropriately used as fuel of the burner 300. The reason is because a temperature increase based on the combustion of the burner 300 may be limited by steam, and in particular, in case where the burner 300 is a catalytic burner, steam may seriously affect the catalyst.

Therefore, it is preferable to use the anode discharge gas as fuel for burning of the burner 300 after removing the steam. The steam may be removed through various methods, and preferably, in terms of utilization of heat through collection of heat, a temperature of the anode discharge gas may be lowered to condense and remove steam.

As described above, in order to collect and use heat of the anode discharge gas and lower the temperature of the anode discharge gas, the heat exchanger 200 according to an embodiment of the present disclosure may include an anode discharge gas cooler 250. The anode discharge gas cooler 250 serves to lower the temperature of the anode discharge gas through heat exchange with another fuel or air.

When the anode discharge gas cooler 250 is provided, the anode discharge gas may be supplied to the anode discharge gas cooler 250 along the first anode discharge gas pipe aop1.

The anode discharge gas supplied to the anode discharge gas cooler 250 may pass through a heat exchanger (not shown) disposed outside the high-temperature box, while moving to the burner 300 along the second anode discharge gas pipe aop2. The anode discharge gas may further be cooled by the heat exchanger (not shown) disposed outside the high-temperature box, and heat of the anode discharge gas collected by the heat exchanger (not shown) may be used for heating hot water supply, and the like.

A condenser (not shown) may be disposed in the second anode discharge gas pipe aop2 passing through the outside of the high-temperature box, and water condensed due to temperature drop may be separated and discharged from the anode discharge gas in the condenser (not shown). Accordingly, a large amount of steam contained in the anode discharge gas may be removed, and the anode discharge gas may be used more effectively as fuel for burning of the burner 300.

Formation of a coating layer according to an embodiment of the present disclosure in the fuel gas supply line will be described.

Fuel or steam contained in fuel is heated in the heat-exchange type reformer 210 so that it may be present at a temperature as high as to cause oxidation due to high temperatures to occur in the heat-exchange type reformer 210 and the second fuel/steam pipe fsp2. Also, heat of the fuel or steam is transmitted to the heat-exchange type reformer 210 and the second fuel/steam pipe fsp2 so that the heat-exchange type reformer 210 and the second fuel/steam pipe fsp2 also have a temperature similar to that of the fuel or steam.

Since the fuel or steam may contain a small amount of oxygen, oxidation due to high temperatures may occur at inner surfaces of the heat-exchange type reformer 210 and the second fuel/steam pipe fsp2. Therefore, according to an embodiment of the present disclosure, as illustrated in FIG. 3, a coating layer may be formed on the inner surfaces of the heat exchanger reformer 210 and the second fuel/steam pipe fsp2. The coating layer formed on the inner surfaces may be formed to be in direct contact with fuel or steam.

Also, outer surfaces of the heat-exchange type reformer 210 and the second fuel/steam pipe fsp2 come into contact with air due to an inflow of ambient air to the inside of the high-temperature box. Oxidation due to high temperatures may also occur at outer surfaces of the heat-exchange type reformer 210 and the second fuel/steam pipe fsp2 due to the high temperatures and the contact with oxygen based on air. Therefore, according to an embodiment of the present disclosure, as illustrated in FIG. 3, a coating layer may be formed on the outer surfaces of the heat-exchange type reformer 210 and the second fuel/steam pipe fsp2.

As described above, in case where the coating layer is formed on the inner surface of the heat-exchange type reformer 210, a small amount of heat of the fuel or steam may be transmitted to the outer surface of the heat-exchange type reformer 210. In other words, heat is insulated by the coating layer, and as a result, a temperature of the outer surface of the heat-exchange type reformer 210 may be lowered to cause less oxidation due to high temperatures on the outer surface of the heat-exchange type reformer 210.

Since the heat exchange medium maintains a high temperature state before and after it passes through the heat-exchange type reformer 210, a metal coating layer for preventing high-temperature oxidation may be formed on the pipe hep1 along which the heat exchange medium is supplied to the heat-exchange type reformer 210 and on the pipe hep2 along which the heat-exchange medium is discharged from the heat-exchange type reformer 210 to the outside of the high-temperature box.

Meanwhile, the anode discharge gas is present at a temperature as high as to cause oxidation due to high temperatures in the first anode discharge gas pipe aop1. Since the anode discharge gas may contain a small amount of oxygen, oxidation due to high temperatures may occur on an inner surface of the first anode discharge gas pipe aop1. Therefore, according to an embodiment of the present disclosure, as illustrated in FIG. 3, a coating layer may be formed on the inner surface of the first anode discharge gas pipe aop1.

Also, the anode discharge gas is transmitted to the first anode discharge gas pipe aop1, and thus, the first anode discharge gas pipe aop1 has a temperature similar to that of the anode discharge gas. The outer surface of the first anode discharge gas pipe aop1 comes into contact with air based on an inflow of ambient air to the inside of the high-temperature box. Oxidation due to high temperatures may occur on the outer surface of the first anode discharge gas pipe aop1 due to the high temperatures and the contact with oxygen based on air. Therefore, according to one embodiment of the present disclosure, as illustrated in FIG. 3, a coating layer may be formed on the outer surface of the first anode discharge gas pipe aop1.

Further, after the anode discharge gas passes through the anode discharge gas cooler 250 or further passes through another heat exchanger, a temperature of the anode discharge gas is significantly lowered so that high temperature oxidation does not occur in the second anode discharge gas pipe aop2 supplied to the burner 300. However, since the burner 300 operates at a very high temperature, the inner surface of the second anode discharge gas pipe aop2 from the burner 300 to a predetermined distance may be present at a temperature as high as to cause high-temperature oxidation due to indirect heating by the burner 300. Here, the predetermined distance may be a distance to a point maintained at a temperature equal to or higher than 400°C, a representative temperature at which high temperature oxidation starts to occur.

Since the anode discharge gas may contain a small amount of oxygen, oxidation due to high temperatures may also occur at the inner surface of the second anode discharge gas pipe aop2 from the burner 300 to a predetermined distance. Therefore, according to an embodiment of the present disclosure, as illustrated in FIG. 3, a coating layer may be formed on the inner surface of the second anode discharge gas pipe aop2 from the burner 300 to the predetermined distance.

Also, the outer surface of the second anode discharge gas pipe aop2 from the burner 300 to the predetermined distance also comes into contact with air based on an inflow of ambient air to the inside of the high-temperature box. Oxidation due to high temperatures may also occur at the outer surface of the second anode discharge gas pipe aop2 from the burner 300 to the predetermined distance due to the high temperatures and the contact with oxygen. Therefore, according to an embodiment of the present disclosure, as illustrated in FIG. 3, a coating layer may be formed on the outer surface of the second anode discharge gas pipe aop2 from the burner 300 to the predetermined distance.

Next, an air supply line in which air is supplied to the inside of the high-temperature box and the air is heated through the air preheater 220 and is subsequently supplied to the cathode of the stack 400 will be described.

Air used for power generation in the stack 400 is supplied to the inside of the high-temperature box, and the air may be in a room temperature state. The air supplied to the inside of the high-temperature box is supplied to the cathode 413 of the stack 400 along the air pipes ap1 and ap2. Oxygen of air supplied to the cathode 413 is reduced to oxygen ions O²⁻ by an electrochemical reaction between the cathode 413 and the anode 411, and the oxygen ions O²⁻ are conducted to the anode 411 through the electrolyte 412, an ion conductor.

Air supplied to the cathode 413 must be heated to a predetermined temperature. As described above, air may be heated through the air preheater 220. That is, the air may be heat-exchanged with a combustion gas in the air preheater 220 so as to be heated.

The air supplied at the room temperature from the high-temperature box may be supplied to the air preheater 220 along the first air pipe ap1. The air supplied to the air preheater 220 may be heat-exchanged with a combustion gas in the air preheater 220 so as to be primarily heated. The primarily heated air may be supplied to the cathode 413 of the stack 400 along the second air pipe ap2.

The air supplied to the cathode 413 is used for power generation in the stack 400 and a cathode-off gas discharged from the cathode 413 is supplied to the burner 300 along cathode discharge gas pipes cop1 and cop2 so as to be used for burning of the burner. In more detail, the cathode discharge gas is supplied to one or more heat exchangers 260 along the first cathode discharge gas pipe cop1, and the cathode discharge gas heat-exchanged in the heat exchanger 260 may be supplied to the burner 300 along the second cathode discharge gas pipe cop2. The heat exchanger 260 serves to adjust a temperature of the high-temperature anode discharge gas to a temperature appropriate for use in the burner 300.

Formation of a coating layer according to an embodiment of the present disclosure in the air supply line will be described.

The air is present at a temperature as high as to cause oxidation due to high temperatures in the air preheater 220 and the second air pipe ap2. Also, heat of the air is transmitted to the air preheater 220 and the second air pipe ap2 so that the air preheater 220 and the second air pipe ap2 also have a temperature similar to that of the combustion gas.

Since air contains a large amount of oxygen, oxidation due to high temperatures may occur at the inner surfaces of the air preheater 220 and the second air pipe ap2. Therefore, according to an embodiment of the present disclosure, as illustrated in FIG. 3, a coating layer may be formed on the inner surfaces of the air preheater 220 and the second air pipe ap2. Here, the coating layer formed on the inner surfaces may be formed to be in direct contact with the air.

Further, the air preheater 220 and the second air pipe ap2 are the only part and pipe along which the high temperature oxygen passes in the process in which the high-temperature oxygen is supplied to the cathode 413. As a result, since inner surfaces of the air preheater 220 and the second air pipe ap2 come into contact with the high-temperature oxygen, chrome volatilization based on high temperatures also simultaneously occur. That is, the inner surfaces of the air preheater 220 and the second air pipe ap2 are the only section of the line leading to the cathode 413 in which chrome volatilization occurs. Thus, according to an embodiment of the present disclosure, as illustrated in FIG. 4, a coating layer for preventing chromium volatilization may be formed on the inner surfaces of the air preheater 220 and the second air pipe ap2. Here, the coating layer formed on the inner surfaces may also be formed to be in direct contact with air.

As described above, although the electrode coating technique of Patent document 1 is applied, the degradation of performance of the stack due to chromium volatilization is not completely solved. However, according to the present disclosure, it is ascertained that chromium volatilization occurs outside the stack 400 and that the only section in which the volatilized chrome flows into the cathode is the inner surfaces of the air preheater 220 and the second air pipe ap2, and thus, the coating layer for preventing chromium volatilization is formed on the inner surfaces, thereby solving the problem of the degradation of performance of the stack caused as the volatilized chromium flows into the cathode.

Also, the outer surfaces of the air preheater 220 and the second air pipe ap2 come into contact with air based on an inflow of ambient air to the inside of the high-temperature box. Due to the high temperatures and contact with oxygen based on air, oxidation based on the high temperatures may also occur at the outer surfaces of the air preheater 220 and the second air pipe ap2. Therefore, according to an embodiment of the present disclosure, as illustrated in FIG. 3, a coating layer may be formed on the outer surfaces of the air preheater 220 and the second air pipe ap2.

Meanwhile, the cathode discharge gas is present at a temperature as high as to cause oxidation due to high temperatures in the cathode discharge gas pipes cop1 and cop2. Also, heat of the cathode discharge gas is transmitted to the cathode discharge gas pipes cop1 and cop2, so that the cathode discharge gas pipes cop1 and cop2 also have a temperature similar to that of the cathode discharge gas. Even when a separate heat exchanger 260 is provided in the cathode discharge gas pipe and divided into the first cathode discharge gas pipe cop1 and the second cathode discharge gas pipe cop2, since the cathode discharge gas at high temperatures passes through the both sides, the first cathode discharge gas pipe cop1 and the second cathode discharge gas pipe cop2 have a temperature at which oxidation can occur.

Since the cathode discharge gas may contain a small amount of oxygen, oxidation due to high temperatures may occur at the inner surfaces of the cathode discharge gas pipes cop1 and cop2. Therefore, according to an embodiment of the present disclosure, as illustrated in FIG. 3, a coating layer may be formed on the inner surfaces of the cathode discharge gas pipes cop1 and cop2.

Further, the outer surfaces of the cathode discharge gas pipes cop1 and cop2 come into contact with the air based on an inflow of ambient air into the high-temperature box. Due to the high temperatures and the contact with oxygen based on air, oxidation due to high temperatures may also occur at the outer surfaces of the cathode discharge gas pipes cop1 and cop2. Therefore, according to an embodiment of the present disclosure, as illustrated in FIG. 3, a coating layer may be formed on the outer surfaces of the cathode discharge gas pipes cop1 and cop2.

Finally, a supply line for combustion fuel and air supplied to the burner 300 of the high-temperature box will be described.

The burner 300 may be supplied with fuel for combustion and air for combustion, in addition to an anode discharge gas (including fuel) discharged from the anode 411 of the stack 400 and a cathode discharge gas (including air) discharged from the cathode 413 of the stack 400, to generate a combustion gas.

Referring to FIG. 2, fuel for combustion may be supplied to the burner 300 along a combustion fuel pipe cfp1. Also, air for combustion may be supplied to the burner 300 along a combustion air pipe cap1. Meanwhile, the combustion gas in the burner 300 is present at a temperature as high as to cause oxidation based on high temperatures, and heat of the combustion gas is transmitted to the burner 300 and also to the combustion fuel pipe cfp1 and the combustion air pipe cap1 at a predetermined distance from the burner 300. Therefore, the combustion fuel pipe cfp1 and the combustion air pipe cap1 at the predetermined distance from the burner 300 also have a high temperature similar to that of the combustion gas.

Since the fuel for combustion and the air for combustion contain oxygen, oxidation due to high temperatures may occur at the inner surfaces of the combustion fuel pipe cfp1 and the combustion air pipe cap1 at the predetermined distance from the burner 300. Thus, according to an embodiment of the present disclosure, as illustrated in FIG. 3, a coating layer may be formed on the inner surfaces of the combustion fuel pipe cfp1 and the combustion air pipe cap1 at the predetermined distance from the burner 300.

Also, outer surfaces of the combustion fuel pipe cfp1 and the combustion air pipe cap1 at the predetermined distance from the burner 300 also come into contact with air based on an inflow of ambient air into the high-temperature box. Due to the high temperatures and the contact with oxygen based on air, oxidation due to high temperatures may also occur on the outer surfaces of the combustion fuel pipe cfp1 and the combustion air pipe cap1 at the predetermined distance from the burner 300. Thus, according to an embodiment of the present disclosure, as illustrated in FIG. 3, a coating layer may be formed on the outer surfaces of the combustion fuel pipe cfp1 and the combustion air pipe cap1 at the predetermined distance from the burner 300.

The predetermined distance may be a distance to a point on the combustion fuel pipe cfp1 and the combustion air pipe cap1 which reaches a temperature at which oxidation due to high temperatures may occur due to heat transmission based on a combustion gas within the burner 300. For example, it may be a distance to a point maintained at a temperature equal to or higher than 400°C, a representative temperature at which high-temperature oxidation starts to occur.

Although the embodiments of the present disclosure have been described with reference to the accompanying drawings, it will be apparent to a person skilled in the art to which the invention pertains that various changes in forms may be made without departing from the spirit or essential features of the present disclosure. Therefore, the foregoing specific embodiments are intended to be illustrative in all aspects rather than limiting. The scope of the present disclosure shall be defined by the appended claims rather than the foregoing description and it should be interpreted that the present disclosure shall extend to all modifications or changes derived from the definition, ranges, and equivalents of the claims.

## Claims

1. A solid oxide fuel cell system including a coating layer, the solid oxide fuel cell system comprising:
a high-temperature box;
a burner, a heat exchanger, and a stack disposed within the high-temperature box;
a plurality of pipes as gas transfer passages among the burner, the heat exchanger, and the stack; and
a coating layer formed on a surface of the burner, the heat exchanger, or the pipes to prevent oxidation due to high temperatures and chromium volatilization due to high temperatures.

2. The solid oxide fuel cell system of claim 1, wherein
the coating layer is a ceramic coating layer.

3. The solid oxide fuel cell system of claim 2, wherein
a ceramic material used in the ceramic coating layer is a material used in an electrolyte of a stack of a solid oxide fuel cell.

4. The solid oxide fuel cell system of claim 2, wherein the ceramic material used in the ceramic coating layer is a compound including zirconia or ceria.

5. The solid oxide fuel cell system of claim 2, wherein
the ceramic coating layer has a thickness ranging from 5 to 100 µm.

6. The solid oxide fuel cell system of claim 2, wherein
an oxide film is formed between the surface of the burner, the heat exchanger, or the pipes and the ceramic coating layer to enhance adhesion between the surface and the ceramic coating layer.

7. The solid oxide fuel cell system of claim 1, wherein
the coating layer is a metal coating layer.

8. The solid oxide fuel cell system of claim 7, wherein
the metal coating layer is formed of a metal material as an alloy of one or more selected from the group consisting of nickel, cobalt, palladium, platinum, and gold.

9. The solid oxide fuel cell system of claim 7, wherein
the metal material is a material used in an electrode of a stack of a solid oxide fuel cell.

10. The solid oxide fuel cell system of claim 7, wherein
the metal coating layer has a thickness ranging from 2 to 20 µm.

11. The solid oxide fuel cell system of claim 7, wherein
a metal oxide layer is formed on a surface of the metal coating layer.

12. The solid oxide fuel cell system of claim 1, wherein
the heat exchanger includes a heat-exchange type reformer and an air preheater,
a heat-exchange medium is supplied to the heat-exchange type reformer along the pipe, a combustion gas of the burner is supplied to the air preheater along the pipe, and
the coating layer is formed on an outer or inner surface of the burner, the heat-exchage type reformer and the aire preheater in which the heat-exchange medium or the combustion gas is present, the pipe along which the heat-exchange medium is supplied to the heat-exchange type reformer, and a pipe from the burner to the air preheater.

13. The solid oxide fuel cell system of claim 12, wherein
the coating layer is formed on an inner or outer surface of a pipe along which the heat-exchange medium from the heat-exchange type reformer is discharged to the outside of the high-temperature box and a pipe along which the combustion gas from the air preheater is discharged to the outside of the high-temperature box.

14. The solid oxide fuel cell system of claim 1, wherein
the heat exchanger includes a heat-exchange type reformer,
fuel or steam supplied to the stack is sequentially supplied to the heat-exchange type reformer and the stack along the pipe, and
the coating layer is formed on an inner or outer surface of the heat-exchange type reformer in which the fuel or steam is present or a pipe from the heat-exchange type reformer to the stack.

15. The solid oxide fuel cell system of claim 1, wherein
a cathode discharge gas discharged from a cathode of the stack is supplied to the burner, and
the coating layer is formed on an inner or outer surface of a pipe from the cathode of the stack in which the cathode discharge gas is present to the burner.

16. The solid oxide fuel cell system of claim 1, wherein
the heat exchanger includes an anode discharge gas cooler,
an anode discharge gas discharged from an anode of the stack is supplied to the anode discharge gas cooler, and
the coating layer is formed on an inner or outer surface of a pipe from the anode of the stack in which the anode discharge gas is present to the anode discharge gas cooler.

17. The solid oxide fuel cell system of claim 16, wherein
the pipe further includes a pipe supplying the anode discharge gas from the anode discharge gas cooler to the burner,
the anode discharge gas is supplied to the burner along the pipe, and
the coating layer is formed on an inner or outer surface of the pipe at a predetermined distance from the burner in which the anode discharge gas is present.

18. The solid oxide fuel cell system of claim 1, wherein
the heat exchanger includes an air preheater,
air supplied to the stack is supplied to the air preheater and the stack along the pipe, and
the coating layer is formed on an inner surface of the air preheater in which the air is present or a pipe from the air preheater to the stack.

19. The solid oxide fuel cell system of claim 1, wherein
the heat exchanger includes an air preheater,
air supplied to the stack is supplied to the air preheater and the stack along the pipe, and
the coating layer is formed on an outer surface of the air preheater in which the air is present or a pipe from the air preheater to the stack.

20. The solid oxide fuel cell system of claim 1, wherein
the pipe further includes a pipe supplying air for combustion from the outside of the high-temperature box to the burner,
the air for combustion is supplied to the burner along the pipe, and
the coating layer is formed on an inner or outer surface of the pipe at a predetermined distance from the burner in which the air for combustion is present.

21. The solid oxide fuel cell system of claim 1, wherein
the pipe further includes a pipe supplying fuel for combustion from the outside of the high-temperature box to the burner,
the fuel for combustion is supplied to the burner along the pipe, and
the coating layer is formed on an inner or outer surface of the pipe at a predetermined distance from the burner in which the fuel for combustion is present.
